# EUROPÄISCHE PATENTSCHRIFT

(11) **EP 3 469 887 B1**
(45) Veröffentlichungstag und Bekanntmachung des Hinweises auf die Patenterteilung: **09.12.2020**
(21) Anmeldenummer: 18199054.0
(22) Anmeldetag: 08.10.2018
(51) Int. Cl.: A01G 9/24, F24F 1/02

(54) **PFLANZEN-AUFZUCHT-BAUEINHEIT ZUM NACHTRÄGLICHEN EINBAU IN EINE UMHAUSUNG**
PLANT GROWING CONSTRUCTION UNIT FOR SUBSEQUENT PLACING IN A HOUSING
MODULE DE CULTURE DE PLANTES DESTINÉ AU MONTAGE ULTÉRIEUR DANS UNE ENCEINTE

(30) Priorität: 10.10.2017 DE 102017123565
(43) Veröffentlichungstag der Anmeldung: 17.04.2019
(73) Patentinhaber: Frost, Philipp, 80337 München (DE)
(72) Erfinder: Frost, Philipp, 80337 München (DE)
(74) Vertreter: Rothkopf, Ferdinand

(56) Entgegenhaltungen:
- CN-A- 103 416 292
- CN-A- 106 989 464
- CN-U- 205 351 559
- CN-U- 206 247 169
- CN-U- 206 320 862
- JP-A- 2017 083 096

## Beschreibung

### Hintergrund der Erfindung

Die Erfindung betrifft eine Vorrichtung nach Anspruch 1.

Als Umhausung sind Schränke allgemein bekannt und umfassen als solches einen Schrankkorpus, an dem mittels mindestens einer Schranktüre ein Zugang zu einem Innenraum des Schrankes gewährt und auch versperrt werden kann. Ferner sind als Umhausung Zelte oder andere Umhüllungen bekannt.

Pflanzen-Aufzuchtschränke bzw. Pflanzen-Aufzuchtzelte werden insbesondere in Labors und Versuchsanstalten verwendet, um darin Pflanzen kontrolliert aufzuziehen. Ein solcher Pflanzen-Aufzuchtschrank weist meist eine Beleuchtungseinrichtung und eine Belüftungseinrichtung sowie ggf. eine Bewässerungseinrichtung für die darin untergebrachten Pflanzen auf. Der Pflanzen-Aufzuchtschrank umfasst dabei ebenfalls einen verschließbaren Innenraum, der mittels einer Schranktüre zu öffnen ist. Die Beleuchtungseinrichtung dient in dem geschlossenen Innenraum dazu, um die sich darin befindenden Pflanzen mit einer angemessenen Lichteinstrahlung zu versorgen. Die Belüftungseinrichtung ist dazu vorgesehen, um die Pflanzen im Pflanzen-Aufzuchtschrank mit Frischluft zu versorgen. Dabei wird von der Belüftungseinrichtung in der Regel aus der Umgebung bzw. von außerhalb des Pflanzen-Aufzuchtschrankes in diesen hinein ansaugt. Diese Luft wird dann durch den Pflanzen-Aufzuchtschrank hindurch und wieder nach außerhalb transportiert. Außer der Luft und dem Licht, benötigen die Pflanzen im Pflanzen-Aufzuchtschrank auch Wasser. Dieses Wasser wird mittels der Bewässerungseinrichtung an die Pflanzen kontrolliert zugeführt.

Aus DE 10 2007 033 923 A1 ist ein Pflanzen-Aufzuchtschrank mit einem Gehäuse als Schrankkorpus und zwei Schranktüren bekannt, der luftdicht geschlossen ausgeführt ist und bei beständigem Unterdruck nur mit dosierter Zuluft und mit einer verwirbelungsfreien Luftführung bei Öffnung betrieben wird. Ferner ist die sichere Entsorgung der Pflanzenreste dadurch gewährleistet, dass ein Aufzucht-Boden in eine Folienwanne eingebracht ist. Ein weiterer Aufzuchtschrank ist aus der CN 103 416 292 A bekannt.

Bekannte Pflanzen-Aufzuchtschränke haben den Nachteil, dass sie von ihrem Benutzer erst aufwendig zusammen zu stellen, zusammen zu bauen und in Betrieb zu setzen sind.

Im Gegensatz zu bekannten Pflanzen-Aufzuchtschränken ist erfindungsgemäß eine Vorrichtung nach Anspruch 1 geschaffen. Diese Pflanzen-Aufzucht-Baueinheit ist mit einem Gehäuse gestaltet, an dem eine Befestigungseinrichtung zum Aufhängen der Pflanzen-Aufzucht-Baueinheit in einer zugehörigen Umhausung, insbesondere in einem zugehörigen Schrank, vorgesehen ist und in dem eine Beleuchtungseinrichtung zum Beleuchten von sich im Innenraum befindenden Pflanzen sowie eine Belüftungseinrichtung zum Belüften des Innenraums integriert sind.

Die erfindungsgemäße Vorrichtung bildet damit für den Benutzer eine Einheit, die einfach in einen von ihm selbst bereitgestellten Schrank oder ein Zelt eingesetzt werden kann. Die Baueinheit weist alle für den Einbau und Betrieb notwendigen und sinnvollen Einrichtungen in einem kompakten Gehäuse auf. Das Gehäuse bildet zugleich den Träger für die Einrichtungen und die Aufhängung selbst im Schrank.

Die Befestigungseinrichtung ist bevorzugt mittels mindestens einer Magnetverbindung gestaltet. Eine solche Befestigungseinrichtung ist insbesondere für Stahlschränke von Vorteil, weil an diesen dann keine gesonderte Befestigung auf Seiten des Schrankes notwendig ist.

Alternativ oder zusätzlich ist die Befestigungseinrichtung bevorzugt mittels mindestens einer Klettverbindung gestaltet. Eine Klettverbindung ist ein fast beliebig oft zu lösendes Verschlussmittel, das auf dem Prinzip von Klettfrüchten beruht. Die bionische Umsetzung besteht vorzugsweise aus zwei Flächen, von denen die eine Fläche flexible Widerhäkchen und die andere Fläche Schlaufen hat. Zusammengepresst ergeben sie einen belastungsfähigen, aber reversiblen Schnellverschluss. Eine solche Klettverbindung ist, wie auch eine Magnetverbindung, besonders dazu geeignet, die erfindungsgemäße Pflanzen-Aufzucht-Baueinheit immer wieder neu in einem Schrank anzubringen und aus diesem zu entfernen. Die Klettverbindung kann dabei einfach hergestellt und schadlos auch wieder gelöst werden.

Ferner ist die Befestigungseinrichtung vorteilhaft mittels mindestens einer Klebeverbindung gestaltet. Eine solche Klebeverbindung kann sehr schnell hergestellt werden und dabei hohe Kräfte übertragen.

Bei der erfindungsgemäßen Pflanzen-Aufzucht-Baueinheit ist bevorzugt auch das Gehäuse mittels einer Trennwand in einen ersten und einen zweiten Gehäusebereich geteilt und in der Trennwand ist eine Filtereinrichtung angeordnet. Die Filtereinrichtung ist dabei einfach im Inneren des Gehäuses zu platzieren, kann dort je nach Bedarf in verschiedensten Größen angeordnet sein und ist zugleich im Bedarfsfall leicht zu wechseln.

Vorteilhaft ist weiterhin die Beleuchtungseinrichtung mittels mindestens einer Leuchte gestaltet, die in dem ersten Gehäusebereich angeordnet ist. Die mindestens eine Leuchte befindet sich dabei benachbart und insbesondere parallel zu der Filtereinrichtung, wodurch eine besonders kompakte Gesamtanordnung geschaffen ist.

Die Belüftungseinrichtung ist vorzugsweise mittels mindestens eines Lufteinlasses gestaltet, der an dem ersten Gehäusebereich angeordnet ist. Der mindestens eine Lufteinlass ist dabei derart angeordnet, dass vorteilhaft Platz für die Anordnung der Beleuchtungseinrichtung besteht und zugleich zum Zwecke der Kühlung Luft über diese hinweg, insbesondere über deren Rückseite hinweg, geleitet werden kann.

Der Lufteinlass kann vorteilhaft oben oder unten am Gehäuse sein. Besonders bevorzugt befindet er sich aber seitlich an dem Gehäuse. Der derart seitlich zu der mindestens einen Beleuchtungseinrichtung angeordnete Lufteinlass lässt ausreichend Platz für die in der Regel großflächige Beleuchtungseinrichtung und stellt zugleich eine vorteilhafte Art der Luftführung bereit. So kann durch den derartigen Lufteinlass wunschgemäß zwischen dem Gehäuse und dem Innenraum des zugehörigen Schrankes Luft ausgetauscht werden.

Die Belüftungseinrichtung ist ferner vorzugsweise mit einem Lüfter gestaltet, der in dem zweiten Gehäusebereich angeordnet ist. Der Lüfter, der auch als Ventilator oder Saug- bzw. Blaseinrichtung bezeichnet werden kann, ist mit der derartigen Gestaltung sehr bauraumsparend unterzubringen.

Vorteilhaft ist schließlich ferner noch Luftleitung zum Leiten von Luft zwischen der Pflanzen-Aufzucht-Baueinheit und der Umgebung des Schranks vorgesehen, die abgetrennt vom restlichen Innenraum des Schrankes ausgestaltet ist. Eine solche Luftleitung ist vorteilhaft als ein starres Rohr oder als ein flexibler Schlauch gestaltet, das bzw. der sich durch den Innenraum des Schrankes hindurch zwischen dem erfindungsgemäßen Gehäuse und einem Korpus des Schrankes erstreckt. Nachfolgend wird ein Ausführungsbeispiel der erfindungsgemäßen Lösung anhand der beigefügten schematischen Zeichnungen näher erläutert. Es zeigt:

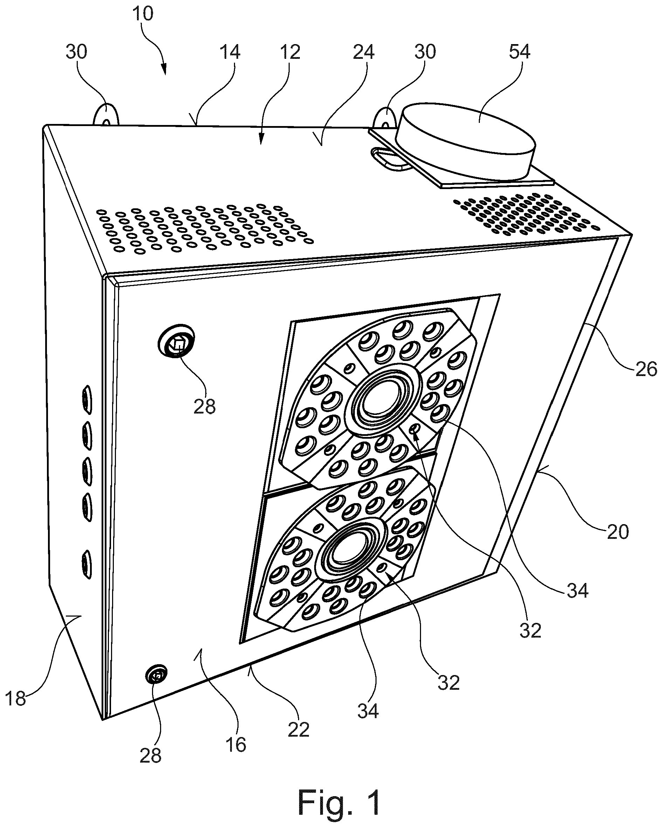

- Fig. 1: eine erste perspektivische Ansicht eines Ausführungsbeispiels einer erfindungsgemäßen Vorrichtung,

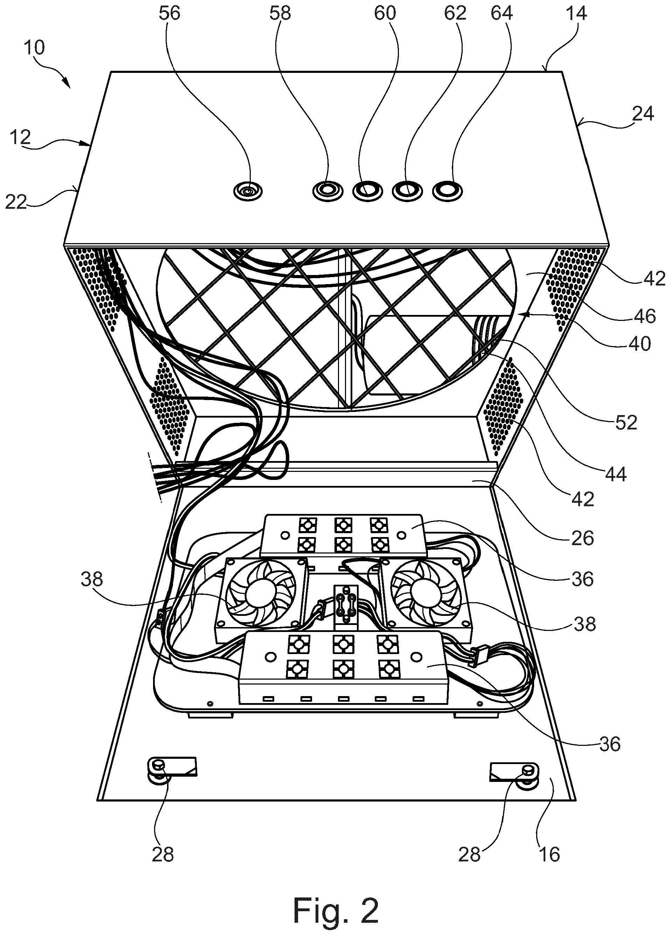

- Fig. 2: eine zweite perspektivische Ansicht der Pflanzen-Aufzucht-Baueinheit gemäß Fig. 1 im geöffneten Zustand und
- Fig. 3: eine perspektivische Vorderansicht eines Schranks mit einer Pflanzen-Aufzucht-Baueinheit gemäß Fig. 1 im eingebauten Zustand.

In den Fig. ist eine Pflanzen-Aufzucht-Baueinheit 10 dargestellt, die ein kubisches Gehäuse 12 mit einer Oberseitenfläche 14, einer Unterseitenfläche 16, einer Vorderseitenfläche 18, einer Rückseitenfläche 20, einer linken Seitenfläche 22 und einer rechten Seitenfläche 24 umfasst. Die Unterseitenfläche 16 ist mittels eines entlang der Rückseitenfläche 20 angeordneten Scharniers 26 schwenkbar gelagert und mittels zweier Verschlüsse 28 an das restliche Gehäuse 12 ortsfest zu koppeln.

An den linken Seitenfläche 22 und an der rechten Seitenfläche 24 befindet sich auf der Höhe der Oberseitenfläche 14 jeweils eine Befestigungseinrichtung 30 in Form einer Lasche mit einem darin ausgebildeten Durchgangsloch. Die Lasche kann zum Befestigen eines Magneten, eines Klettbandes, einer Klebefläche oder einfach zum Anbringen einer Schraube verwendet werden.

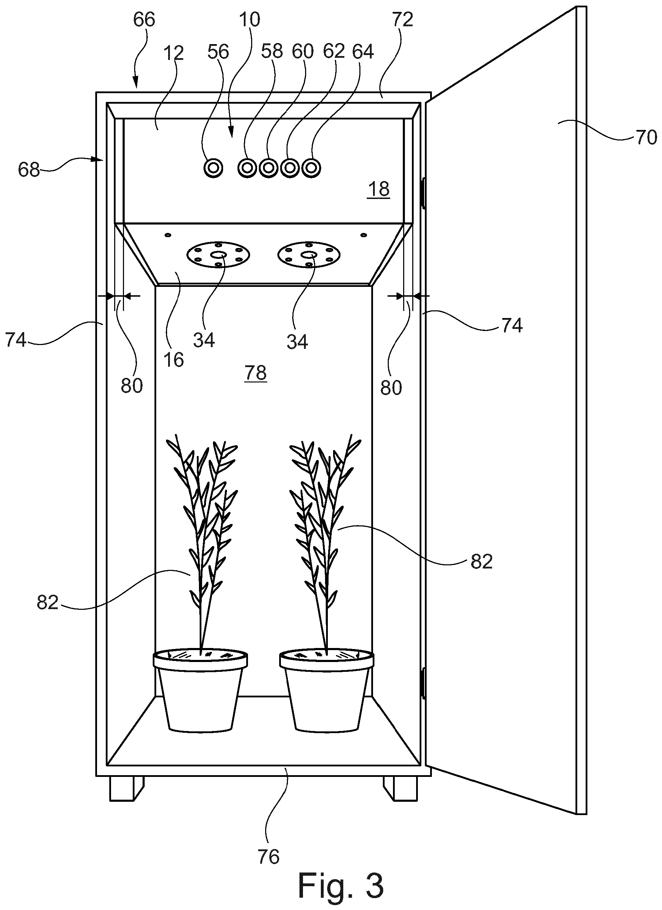

Mit den derartigen Befestigungseinrichtungen 30 lässt sich die Pflanzen-Aufzucht-Baueinheit 10 im Inneren einer Umhausung in Form eines Schrankes 66 montieren, wie nachfolgend zur Fig. 3 noch näher erläutert wird.

An dem Gehäuse 12 ist ferner an der Unterseitenfläche 16 eine Beleuchtungseinrichtung 32 in Form zweier kreisrunder Leuchten 34 angeordnet. Die Leuchten 34 sind mit einer Vielzahl LEDs ausgestattet, um mittels dieser, Pflanzenwachstum fördernde Lichtstrahlung auszustrahlen.

Innenseitig von der Unterseitenfläche 16 ist an dieser dazu eine Leuchtenelektronik 36 in Gestalt einer Steuerplatine und eine Leuchtenbelüftung 38 in Form zweier Ventilatoren angeordnet.

Die Pflanzen-Aufzucht-Baueinheit 10 ist ferner mit einer Belüftungseinrichtung 40 gestaltet, die in Gestalt mehrerer Lufteinlasse 42 und eines Lüfters 44 ausgebildet sind. Eine Trennwand 46 befindet sich im Inneren des Gehäuses 12 und teilt dieses parallel zu der Oberseitenfläche 14 bzw. der Unterseitenfläche 16 in einen ersten Gehäusebereich 48 und einen zweiten Gehäusebereich 50. Die Lufteinlasse 42 sind als eine Vielzahl Löcher gestaltet und befinden sich an der linken Seitenfläche 22 sowie an der rechten Seitenfläche 24 innerhalb des ersten Gehäusebereichs 48. In diesem ersten Gehäusebereich 48 sind auch die Leuchtenelektronik 36 sowie die Leuchtenbelüftung 38 angeordnet.

In die Trennwand 46 ist mittig eine Filtereinrichtung 52 in Gestalt einer großflächigen Filterscheibe bzw. Filtermembran eingesetzt. Der Lüfter 44 befindet sich hinter dieser Filtereinrichtung 52 im zweiten Gehäusebereich 50 und hat dort einen Luftauslass 54. Mittels des Lüfters 44 kann auf diese Weise Luft durch die Lufteinlässe 42 in den ersten Gehäusebereich 48 vorbei an der Leuchtenelektronik 36 durch die Filtereinrichtung 52 hindurch zum Luftauslass 54 gefördert werden.

An der Vorderseitenfläche 18 befindet sich ein erster Schalter 56, der als Aus-Schalter für die gesamte Pflanzen-Aufzucht-Baueinheit 10 dient. Ferner befindet sich dort ein zweiter Schalter 58, ein dritter Schalter 60, ein vierter Schalter 62 und ein fünfter Schalter 64. Der zweite Schalter 58 dient als Ein-Schalter für einen Beleuchtungsmodus "Normal", der dritte Schalter 60 dient als Ein-Schalter für einen Beleuchtungsmodus "Ansaat" mit wenig blauer Lichtstrahlung, der vierte Schalter 62 dient als ein Ein-Schalter für einen Beleuchtungsmodus "Wachsen" mit viel blauer Lichtstrahlung und der fünfte Schalter 64 dient als ein Ein-Schalter für einen Beleuchtungsmodus "Blühen" mit viel roter Lichtstrahlung. Alternativ können auch nur vier Schalter vorgesehen sein, wobei dann der Aus-Schalter und der "Normal"-Schalter miteinander kombiniert sind.

Wie oben bereits erwähnt dient die Pflanzen-Aufzucht-Baueinheit 10 zum Einbau in eine Umhausung in Form eines Schrankes 66 (siehe Fig. 3). Dieser Schrank 66 weist einen kubischen Schrankkorpus 68 auf, der mittels einer Schranktüre 70 vorderseitig zu verschließen ist. Der Schrankkorpus 68 weist dabei eine Korpusdecke 72, unter der die Pflanzen-Aufzucht-Baueinheit 10 aufgehängt ist. Ferner sind rechts und links Korpusseitenwände 74 und unten ein Korpusboden 76 vorhanden. Dadurch ist bei geschlossener Schranktüre 70 insgesamt ein kubischer Innenraum 78 vollständig umgriffen. Die Pflanzen-Aufzucht-Baueinheit 10 befindet sich im oberen Bereich dieses Innenraums 78, wobei im derart eingebauten Zustand die linke Seitenfläche 22 und die rechte Seitenfläche 24 geringfügig mit einem seitlichen Abstand 80 von den benachbarten Korpusseitenwänden 74 beabstandet sind, um einen Zustrom von Luft in die Lufteinlässe 42 zu gewährleisten. Der Luftauslass 54 ist mittels eines (nicht dargestellten) Rohres aus dem Innenraum 78 durch den Schrankkorpus 68 hindurch nach draußen geführt.

Im Innenraum 78 können mit der derartigen Pflanzen-Aufzucht-Baueinheit 10 Pflanzen 82 aufgezogen und zur Blühte gebracht werden.

### Bezugszeichenliste

- 10: Pflanzen-Aufzucht-Baueinheit
- 12: Gehäuse
- 14: Oberseitenfläche
- 16: Unterseitenfläche
- 18: Vorderseitenfläche
- 20: Rückseitenfläche
- 22: linke Seitenfläche
- 24: rechte Seitenfläche
- 26: Scharnier
- 28: Verschluss
- 30: Befestigungseinrichtung
- 32: Beleuchtungseinrichtung
- 34: Leuchte
- 36: Leuchtenelektronik
- 38: Leuchtenbelüftung
- 40: Belüftungseinrichtung
- 42: Lufteinlass
- 44: Lüfter
- 46: Trennwand
- 48: erster Gehäusebereich
- 50: zweiter Gehäusebereich
- 52: Filtereinrichtung
- 54: Luftauslass
- 56: erster Schalter
- 58: zweiter Schalter
- 60: dritter Schalter
- 62: vierter Schalter
- 64: fünfter Schalter
- 66: Umhausung in Form eines Schrankes
- 68: Schrankkorpus
- 70: Schranktüre
- 72: Korpusdecke
- 74: Korpusseitenwand
- 76: Korpusboden
- 78: Innenraum
- 80: seitlicher Abstand
- 82: Pflanze

## Patentansprüche

1. Umhausung (66) mit einer Pflanzen-Aufzucht-Baueinheit (10), wobei die Pflanzen-Aufzucht-Baueinheit ein Gehäuse (12) umfasst, an dem eine Befestigungseinrichtung (30) zum Aufhängen der Pflanzen-Aufzucht-Baueinheit (10) in der Umhausung (66) vorgesehen ist und in dem eine Beleuchtungseinrichtung (32) zum Beleuchten von sich im Innenraum (78) befindenden Pflanzen (82) sowie eine Belüftungseinrichtung (40) zum Belüften des Innenraums (78) integriert sind,
**dadurch gekennzeichnet, dass** die Pflanzen-Aufzucht-Baueinheit (10) zum nachträglichen Einbau in einen Innenraum (78) der Umhausung (66) eingerichtet ist und das Gehäuse (12) mittels einer Trennwand (46) in einen ersten und einen zweiten Gehäusebereich (48; 50) geteilt ist und in der Trennwand (46) eine Filtereinrichtung (52) angeordnet ist, und
wobei eine Luftleitung zum Leiten von Luft zwischen der Pflanzen-Aufzucht-Baueinheit (10) und der Umgebung der Umhausung (66) abgetrennt vom restlichen Innenraum (78) der Umhausung (66) vorgesehen ist.

2. Umhausung (66) mit einer Pflanzen-Aufzucht-Baueinheit (10) nach Anspruch 1,
wobei die Befestigungseinrichtung (30) mittels mindestens einer Magnetverbindung gestaltet ist.

3. Umhausung (66) mit einer Pflanzen-Aufzucht-Baueinheit (10) nach Anspruch 1,
wobei die Befestigungseinrichtung (30) mittels mindestens einer Klettverbindung gestaltet ist.

4. Umhausung (66) mit einer Pflanzen-Aufzucht-Baueinheit (10) nach Anspruch 1,
wobei die Befestigungseinrichtung (30) mittels mindestens einer Klebeverbindung gestaltet ist.

5. Umhausung (66) mit einer Pflanzen-Aufzucht-Baueinheit (10) nach einem der Ansprüche 1 bis 4,
wobei die Beleuchtungseinrichtung (32) mittels mindestens einer Leuchte (34) gestaltet ist, die in dem ersten Gehäusebereich (48) angeordnet ist.

6. Umhausung (66) mit einer Pflanzen-Aufzucht-Baueinheit (10) nach einem der Ansprüche 1 bis 5,
wobei die Belüftungseinrichtung (40) mittels eines Lufteinlasses (42) gestaltet ist, der an dem ersten Gehäusebereich (48) angeordnet ist.

7. Umhausung (66) mit einer Pflanzen-Aufzucht-Baueinheit (10) nach Anspruch 6,
wobei der Lufteinlass (42) seitlich an dem Gehäuse (12) angeordnet ist.

8. Umhausung (66) mit einer Pflanzen-Aufzucht-Baueinheit (10) nach einem der Ansprüche 1 bis 7,
wobei die Belüftungseinrichtung (40) mit einem Lüfter (44) gestaltet ist, der in dem zweiten Gehäusebereich (50) angeordnet ist.

## Claims

1. Enclosure (66) having a plant-growing modular unit (10), wherein the plant-growing modular unit comprises a housing (12) on which there is provided a fastening device (30) for hanging the plant-growing modular unit (10) in the enclosure (66) and in which there are integrated a lighting device (32) for lighting plants (82) that are located in the interior (78) and a ventilation device (40) for ventilating the interior (78),
**characterised in that** the plant-growing modular unit (10) is adapted for subsequent fitting into an interior (78) of the enclosure (66), and the housing (12) is divided by means of a separating wall (46) into a first and a second housing region (48; 50), and a filtering device (52) is arranged in the separating wall (46), and
wherein an air line for conducting air between the plant-growing modular unit (10) and the area surrounding the enclosure (66) is provided separately from the remainder of the interior (78) of the enclosure (66).

2. Enclosure (66) having a plant-growing modular unit (10) according to claim 1,
wherein the fastening device (30) is formed by means of at least one magnetic connection.

3. Enclosure (66) having a plant-growing modular unit (10) according to claim 1,
wherein the fastening device (30) is formed by means of at least one hook-and-loop connection.

4. Enclosure (66) having a plant-growing modular unit (10) according to claim 1,
wherein the fastening device (30) is formed by means of at least one adhesive connection.

5. Enclosure (66) having a plant-growing modular unit (10) according to any one of claims 1 to 4,
wherein the lighting device (32) is formed by means of at least one lamp (34) which is arranged in the first housing region (48).

6. Enclosure (66) having a plant-growing modular unit (10) according to any one of claims 1 to 5,
wherein the ventilation device (40) is formed by means of an air inlet (42) which is arranged in the first housing region (48).

7. Enclosure (66) having a plant-growing modular unit (10) according to claim 6,
wherein the air inlet (42) is arranged laterally on the housing (12).

8. Enclosure (66) having a plant-growing modular unit (10) according to any one of claims 1 to 7,
wherein the ventilation device (40) is formed by a fan (44) which is arranged in the second housing region (50).

## Revendications

1. Enceinte (66) avec un module de culture de plantes (10), le module de culture de plantes comprenant un carter (12) au niveau duquel un dispositif de fixation (30) est prévu pour la suspension du module de culture de plantes (10) dans l'enceinte (66) et dans lequel un dispositif d'éclairage (32) est intégré pour éclairer les plantes (82) se trouvant dans l'espace intérieur (78) ainsi qu'un dispositif d'aération (40) pour aérer l'espace intérieur (78) ;
**caractérisée en ce que** le module de culture de plantes (10) est conçu pour le montage ultérieur dans un espace intérieur (78) de l'enceinte (66) et le carter (12) étant divisé, à l'aide d'une paroi de séparation (46), en une première et une deuxième zone de carter (48 ; 50) et un dispositif de filtrage (52) étant disposé dans la paroi de séparation (46) ; et
une conduite d'air étant prévue pour conduire l'air entre le module de culture de plantes (10) et l'environnement de l'enceinte (66) séparément du reste de l'espace intérieur (78) de l'enceinte (66).

2. Enceinte (66) avec un module de culture de plantes (10) selon la revendication 1, le dispositif de fixation (30) étant réalisé à l'aide d'au moins une liaison aimantée.

3. Enceinte (66) avec un module de culture de plantes (10) selon la revendication 1, le dispositif de fixation (30) étant réalisé à l'aide d'au moins une liaison à chaîne.

4. Enceinte (66) avec un module de culture de plantes (10) selon la revendication 1, le dispositif de fixation (30) étant réalisé à l'aide d'au moins liaison collée.

5. Enceinte (66) avec un module de culture de plantes (10) selon l'une quelconque des revendications 1 à 4, le dispositif d'éclairage (32) étant réalisé à l'aide d'au moins une lampe (34) disposée dans la première zone de carter (48).

6. Enceinte (66) avec un module de culture de plantes (10) selon l'une quelconque des revendications 1 à 5, le dispositif d'aération (40) étant réalisé à l'aide d'une admission d'air (42) disposée au niveau de la première zone de carter (48).

7. Enceinte (66) avec un module de culture de plantes (10) selon la revendication 6, l'admission d'air (42) étant disposée en côté au niveau du carter (12).

8. Enceinte (66) avec un module de culture de plantes (10) selon l'une quelconque des revendications 1 à 7, le dispositif d'aération (40) étant réalisé avec un ventilateur (44) disposé dans la deuxième zone de carter (50).
